# EUROPEAN PATENT APPLICATION

(11) **EP 2 317 793 A1**
(43) Date of publication of application: **04.05.2011**
(21) Application number: 09290820.1
(22) Date of filing: 27.10.2009
(51) Int. Cl.: H04W 24/10

(54) **Method of operating a communications terminal and communications terminal**

(71) Applicant: Alcatel Lucent, 75008 Paris (FR)
(72) Inventor: Halbauer, Hardy, 76275 Ettingen (DE); Wild, Thorsten, 70435 Stuttgart (DE)
(74) Representative: Schäfer, Wolfgang

(57) **Abstract**

The invention relates to a method of operating a communications terminal (10a), particularly a mobile terminal of a cellular communications system, wherein said communications terminal (10a) exchanges (300) data with a further communications device (20a), particularly a base station of a cellular communications system, over a first wireless communications link (100a), wherein said communications terminal (10a) determines (310) channel state information related to said first wireless communications link (100a), and wherein said communications terminal (10a) forwards said channel state information to said further communications device (20a) and/or another remote device (31) over a second wireless communications link (200a), which is different from said first wireless communications link (100a).

## Description

The present invention relates to a communications terminal, particularly a mobile terminal of a cellular communications system, and to a method of operating such a communications terminal.

The present invention further relates to a base station, a network node for a wireless communications system, and a communications system.

### Background

Network elements such as communications terminals of advanced wireless communications systems provide for determining channel state information which characterises a state of a transmission channel of a wireless communications link between said terminal and a further device such as a base station.

The channel state information is transmitted to said further device, e.g. the base station, to enable improved transmission based on the actual channel state.

The required amount of signalling for the process of sending channel state information to the base station can take large portions of an available uplink bandwidth provided by said communications link between the terminal and the base station.

Accordingly, there is a need to provide an improved communications terminal and method of operating such terminal which ensure a larger amount of free uplink bandwidth for transmitting user data over the communications link.

### Summary

According to the present invention, regarding the abovementioned method of operating a communications terminal, this object is achieved by said communications terminal exchanging data with a further communications device, particularly a base station of a cellular communications system, over a first wireless communications link, wherein said communications terminal determines channel state information related to said first wireless communications link, and wherein said communications terminal forwards said channel state information to said further communications device and/or another remote device over a second wireless communications link, which is different from said first wireless communications link.

The inventive principle to use a different, i.e. second, wireless communications link for transmitting channel state feedback information advantageously enables to provide a large amount of free uplink bandwidth for transmitting user data over the first communications link thus not overburdening the first communications link with channel state feedback information and related signalling.

Consequently, the uplink bandwidth or uplink capacity, respectively, of the first wireless communications link will be fully available for actual data transmission, e.g. of user data. At the same time, the inventive usage of a second wireless communications link advantageously ensures that a considerable amount of bandwidth is also available for transmitting channel state information which enables to provide the base station - or another device exchanging data with the communications terminal over the first communications link - with detailed feedback on an actual state of a wireless transmission channel associated with the first communications link.

Thus, by employing the inventive principle, communications over the first wireless communications link may be optimized without jamming the uplink bandwidth of said first wireless communications link with channel state related information.

A further advantage of using a separate, second wireless communications link for transmitting the channel state information is that said channel state information can be transmitted with higher efficiency over the second wireless communications link, since it is dedicated to this purpose and it is not required to simultaneously carry user data. For instance, when being transmitted over the inventive dedicated second wireless communications link, channel state information is not required to be "squeezed" into a frame structure of an uplink shared channel or some other type of channel provided for uplink data transmission within the first communications link. This will firstly improve the handling for uplink scheduling within the first communications link, and secondly, signalling delays that occur when transmitting said channel state information in the uplink direction may potentially be reduced.

The increased efficiency of forwarding channel state information according to the present invention makes uplink transportation of detailed, full channel state information feasible and thus also improves a spectral efficiency and cell edge rate of the communications system.

According to the present invention, the communications terminal may forward said channel state information directly to said further communications device, e.g. a base station, where said channel state information can be used to improve data transmission on the first communications link.

However, alternatively or in addition thereto, the inventive communications terminal may also forward said channel state information to another remote device via said inventive second wireless transmission link. I.e., the determined channel state information is not necessarily (only) forwarded to the base station which can instantly use it. It may rather be collected by the further remote device which may be configured to provide said collected channel state information to a plurality of other devices such as further base stations. The data collecting may be supported by a central database or a distributed database.

According to an embodiment of the invention, alternatively to or in addition to forwarding the determined channel state information, the inventive communications terminal may also process the determined channel state information according to a predetermined method and may forward data derived from said channel state information.

According to a further embodiment, said second wireless communications link uses the same radio access technology, RAT, as the first wireless communications link, and a second carrier frequency which is different from a first carrier frequency used by said first wireless communications link. By using the same RAT for both the first and second wireless communications links, a particularly simple hardware structure of the involved components such as the communications terminal and the base station is sufficient for implementing the inventive principle. The advantage of using a different, second carrier frequency for the second communications link is that the inventive forwarding of channel state information can be performed independently from an ongoing communication over the first communications link associated with the first carrier frequency.

For example, if a radio access technology according to the Universal Mobile Telecommunications System, UMTS, standard is employed for both the first and second wireless communications links, the first wireless communications link has an uplink frequency channel bandwidth of 5 MHz (in the frequency division duplexing case, i.e. UMTS-FDD) at a first carrier frequency and an associated downlink channel bandwidth of 5 MHz, while the second wireless communications link has an uplink frequency channel bandwidth of 5 MHz at a second carrier frequency which is different from the first carrier frequency and an associated downlink channel bandwidth of 5 MHz. I.e., the inventive second wireless communications link corresponds to a separate UMTS frequency channel (i.e., in uplink and downlink direction) which - if not used for the inventive transmission of channel state information - could be used by another user or his mobile terminal, respectively, for data transmissions.

According to another preferred embodiment, said second wireless communications link uses a second radio access technology, RAT, which is different from a first radio access technology that is used for said first wireless communications link. Although requiring the inventive communications terminal to offer compatibility with both RATs, this advantageously ensures that no further resources of the first RAT, which serves to implement the first wireless communications link, have to be allocated for implementing the inventive second wireless communications link. Thus, a system based on the first RAT is not used for the inventive channel state information transmission at all, although it benefits from such channel state information transmission via the second RAT. Advantageously, the second RAT could be designed to enable less costly data transmission, as compared to the first RAT.

According to another preferred embodiment, said first and second radio access technologies comprise: radio access technologies according to the
➢ Global System for Mobile Communications, GSM, standard and/or
➢ Universal Mobile Telecommunications System, UMTS, standard and/or
➢ Long Term Evolution, LTE, standard and/or
➢ LTE-Advanced standard and/or
➢ Institute of Electrical and Electronics Engineers, IEEE, 802.11 (WLAN, wireless local area network, "Wi-Fi"), 802.15 (WPAN, wireless personal area network) (e.g. ZigBee, Bluetooth), 802.16 (WMAN, wireless metropolitan area network, "WiMAX"), 802.20, 802.22 standards.

Generally, any other long-range or short-range radio system enabling the transmission of channel state information may also be employed to constitute the inventive second communications link.

Preferably, the first RAT, which is employed to implement the first wireless communications link, is configured to be interoperable with GSM and/or UMTS and/or LTE standards. Further preferably, the second RAT, which is employed to implement the second wireless communications link for the channel state feedback transmission, is configured to be interoperable with one or more of the IEEE 802.11, 802.15, 802.16, 802.20, 802.22 standards.

A particularly preferred combination of RATs is an LTE-compatible RAT for the first wireless communications link and an IEEE 802.16 ("WiMAX")-compatible RAT for the second wireless communications link.

A further advantageous embodiment proposes that said communications terminal simultaneously, or at least quasi-simultaneously, maintains the first and second wireless communications links. This can either be achieved by providing dedicated transceiver hardware for both RATs of the different wireless communications links or by providing reconfigurable transceiver means which can maintain data communication sessions of both links by alternately handling the different links with their different RATs.

A further advantageous embodiment proposes for the communications terminal to employ carrier frequencies
➢ in the range of about 700 MHz to about 2600 MHz for said first wireless communications link, and
➢ in the range of about 2400 MHz to about 2600 MHz and/or about 3400 MHz to about 3600 MHz and/or about 5700 MHz to about 5900 MHz for said second wireless communications link.

According to another preferred embodiment, said communications terminal forwards said channel state information to a remote device that is configured to collect said channel state information in a database, wherein said communications terminal preferably assigns time stamp information to said channel state information. This enables to build a map of previously determined channel state information which advantageously may be used by several base stations, typically groups of neighboring base stations adhering to the same first RAT. These base stations may benefit from the stored channel state information particularly in such cases where coordinated multi-point transmission and reception, COMP, and interference management schemes are applied. Generally, the concept of storing the channel state information advantageously enables numerous network elements to use the information for improving ongoing or future wireless transmissions. The channel state information related data may be stored centrally, e.g. in a dedicated node, or within a specific base station. It is further possible to store said data in a decentralized database, e.g. with several neighboring base stations sharing one portion of the database.

The aforementioned concept of storing determined channel state information as well as related information, i.e. time stamps and/or position information of the communications devices having determined specific channel state information, advantageously enables to reuse such data whereby less effort is required for individually collecting such data.

A further aspect of the present invention is given by a communications terminal, particularly a mobile terminal of a cellular communications system, wherein said communications terminal is configured to exchange data with a further communications device, particularly a base station of a cellular communications system, over a first wireless communications link, wherein said communications terminal is configured to determine channel state information related to said first wireless communications link, and wherein said communications terminal is configured to forward said channel state information to said further communications device and/or another remote device over a second wireless communications link, which is different from said first wireless communications link.

Advantageously, the communications terminal is configured to perform the method according to the claims 1 to 8.

A further embodiment proposes that said communications terminal is configured to use a radio access technology, RAT, according to the Long Term Evolution, LTE, standard for the first wireless communications link and to use a radio access technology, RAT, according to the IEEE 802.16 standard ("WiMAX") for the second wireless communications link.

A further aspect of the present invention is given by a base station, particularly a base station of a cellular communications system, wherein said base station is configured to exchange data with a further communications device, particularly a terminal of a cellular communications system, over a first wireless communications link, wherein said base station is configured to
➢ receive channel state information related to said first wireless communications link over a second wireless communications link, which is different from said first wireless communications link, and/or to
➢ retrieve channel state information related to said first wireless communications link from a remote device.

For instance, a terminal performing a data exchange with the inventive base station over the first wireless communications link may assess a channel state of a communications channel associated with said first wireless communications link. After determining said channel state, said terminal may forward said channel state information to the base station over the second wireless communications link thus not affecting the first wireless communications link with transmission of said channel state information.

Alternatively or in addition, the terminal may also store determined channel state information to a remote device such as a central database, and the inventive base station - as well as further base stations - may retrieve said channel state information from said central database.

A further aspect of the present invention is given by a network node for a wireless communications system, particularly a cellular communications system, wherein said network node is configured to receive channel state information related to a first wireless communications link of a communications terminal from said communications terminal via a second wireless communications link and to store said channel state information, preferably together with a time stamp.

According to an advantageous embodiment, said network node is configured to forward channel state information, preferably together with associated time stamp information, to a further device, particularly a base station of said wireless communications system.

The network node according to the present invention may also be configured to
➢ predict an evolution of a wireless communications link associated with said channel state information, and/or to
➢ classify said channel state information regarding a speed of a communications terminal and/or the suitability of different communications channels for multiple input multiple output, MIMO, data transmission schemes, and/or a delay spread, and/or to
➢ calculate statistical channel information for specific communications terminals from the channel state information.

Such processing could be performed automatically, i.e. without a specific trigger or request, whenever new channel state information is available. Alternatively, a base station may also explicitly request such extra processing from the inventive network node depending on its feature set and requirements.

A further aspect of the present invention is given by a communications network comprising at least one communications terminal according to the present invention, at least one base station according to the present invention, and at least one database for storing channel state information determined by said at least one communications terminal, wherein said database is preferably
➢ integrated to said at least one base station or
➢ comprised in a separate network node, preferably a network node according to the present invention, or
➢ configured as a distributed database, wherein different portions of said database are assigned to different network elements, particularly different base stations of said communications network.

The inventive communications network enable a sophisticated determination and collection of channel state information and offers the possibility to share said collected channel state information with a plurality of network elements.

Further advantageous embodiments are given by the dependent claims.

### Brief Description of the Figures

Further aspects, features and embodiments of the present invention are given in the following detailed description, with reference to the drawings in which:
Figure 1 depicts an embodiment of the inventive communications network,
Figure 2 depicts a simplified flowchart of a first embodiment of the method according to the present invention, and
Figure 3 depicts a simplified flowchart of a second embodiment of the method according to the present invention.

### Description of the Embodiments

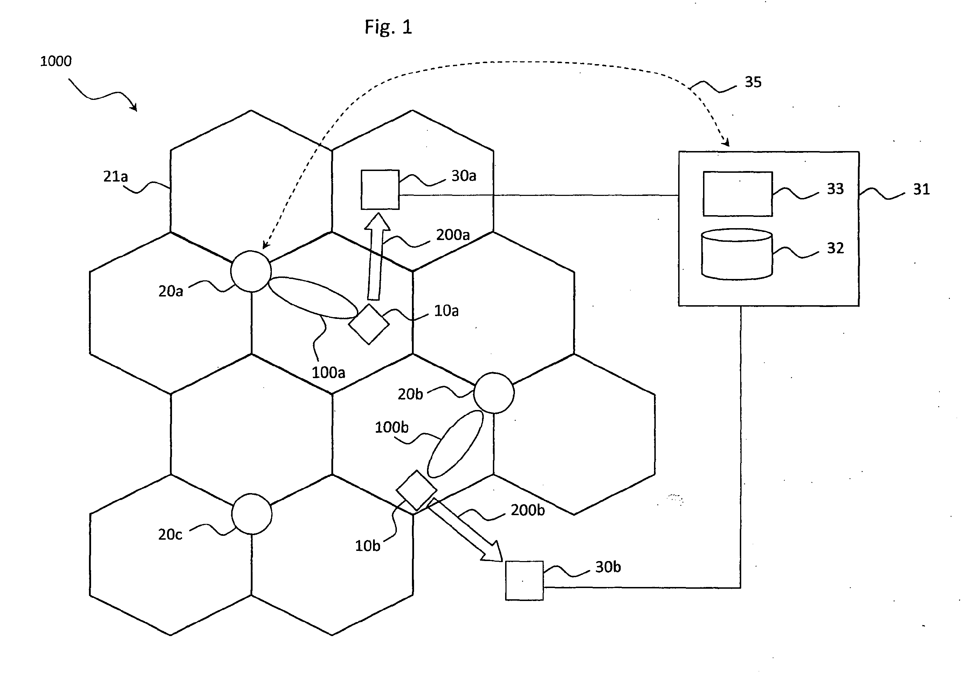

Figure 1 depicts an embodiment of a wireless communications network 1000 according to one aspect of the present invention.

The wireless communications network 1000 can e.g. be configured as a cellular communications network, wherein base stations 20a, 20b, 20c provide wireless communications within specific cells according to a per se known manner. For the sake of clarity, only one of the plurality of cells depicted by Figure 1 is denoted by reference sign 21a.

Usually, each base station 20a, 20b, 20c controls wireless communication in a plurality of neighboring cells which are provided with radio coverage by the base stations 20a, 20b, 20c. According to the present example, every base station 20a, 20b, 20c is assigned three cells, each of which has a substantially hexagonal shape.

Communications terminals 10a, 10b, which may preferably be configured as mobile units, cell phones, for instance, may enter the radio coverage area of the communications system 1000 and may establish a wireless data exchange with the respective base station 20a, 20b, 20c controlling a respective radio cell the communications terminal 10a, 10b has entered.

For instance, the first terminal 10a exchanges data with the first base station 20a over a first wireless communications link 100a. Likewise, the second terminal 10b exchanges data with the second base station 20b over a second wireless communications link 100b.

The terminals 10a, 10b are configured to determine channel state information which characterises a state of a transmission channel of a wireless communications link 100a, 100b between said terminal 10a, 10b and a further device such as the base station 20a, 20b.

Terminal 10a may determine such channel state information for the first wireless communications link 100a to the base station 20a during an ongoing data transmission over said first wireless communications link 100a. After determining the respective channel state information, the terminal 10a transports back said channel state information to the base station 20a to provide it with feedback on the channel state of a wireless channel currently used within the first wireless communications link 100a. Upon receiving said channel state information, the base station 20a may adapt its transceiver (not shown) to optimize the first wireless communications link 100a to the terminal 10a based on the channel state information.

Conventional communications systems propose to transport back channel state information determined by a terminal 10a to the base station 20a by using the existing communications link 100a to the base station 20a.

This, however, leads to the disadvantage, that an uplink data transmission capacity for user data of the first wireless communications link 100a is significantly reduced, because the channel state information and corresponding signalling requires a substantial part of the total uplink capacity.

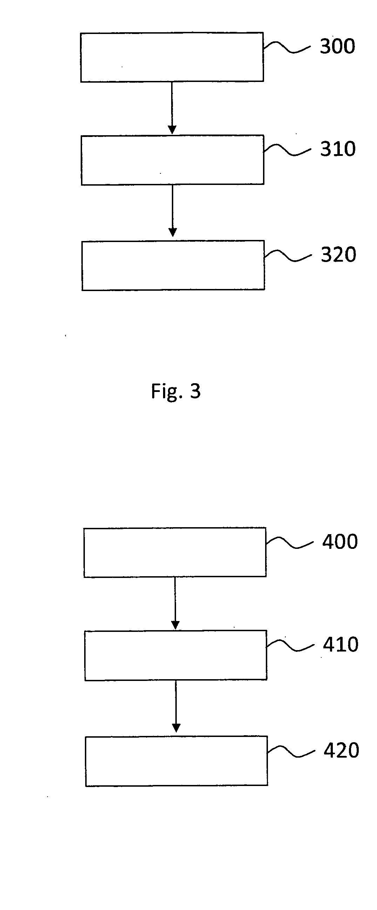

To solve this problem of conventional communications systems, the present invention proposes to perform the inventive method which is explained below with reference to the flowchart of Figure 2.

In a first step 300, the inventive terminal 10a (Figure 1) exchanges data with the base station 20a over the first wireless communications link 100a. The data exchange may e.g. comprise a handover procedure due to a change of the radio cell or any other data exchange between the components 10a, 20a over the first wireless transmission link 100a.

From the results of the ongoing data transmission of step 300, the terminal 10a in step 310 determines channel state information which characterises a radio communications channel that is currently used by the first wireless communications link 100a between the base station 20a and the terminal 10a.

Channel state information in the sense of the present invention may denote any information that is suitable to characterise an actual state of the radio communications channel associated with the first wireless communications link 100a. Channel state information in the sense of the present invention may further denote information on interference such as a signal to interference plus noise ratio, SINR, as well as channel quality indicators, CQI. Channel state information in the sense of the present invention may also comprise respective information from neighbouring radio cells, e.g. an interference level caused by said neighbouring cells.

To enable an efficient supply of the base station 20a with the so determined channel state information, step 320 of the inventive method proposes to forward said channel state information to said base station 20a over a second wireless communications link 200a, which is different from said first wireless communications link 100a.

Thus, advantageously, no channel state information has to be transmitted via the first wireless communications channel 100a, that has originally been established for transmitting user data.

The channel state information is rather transmitted from the terminal 10a either directly to the base station 20a using a second wireless communications link, which is completely separate from the first, already existing wireless communications link 100a that is used for user data.

Alternatively, the channel state information is not forwarded to the base station 20a, but rather to another remote device 30a, 31 (Figure 1) over the inventive second wireless communications link 200a.

This situation is depicted by Figure 1, wherein the block arrow 200a denotes the inventive second wireless communications link. The block arrow 200a is chosen to represent the inventive second wireless communications link since its main purpose, the transmission of channel state information from the terminal 10a to the device 30a and 31, mainly involves data traffic in the direction from the terminal 10a to the device 30a and 31. Of course, the inventive second wireless communications link 200a may be configured to support both uplink and downlink data transmission.

The device 30a represents a base station or an arbitrary type of radio access point with which the terminal 10a can communicate by using the second wireless communications link 200a.

The base station 30a is connected to a remote network node 31, which according to the present embodiment comprises a database 32 that is capable of storing channel state information forwarded from terminal 10a to the network node 31 via the base station 30a.

The data transmission between the elements 30a, 31 may be performed by using any suitable technology. For instance, wireless communication can be employed, as well as wired communication, i.e. over a wide area network or some kind of backbone network.

After storing the channel state information to the central database 32, the channel state information can be shared with all base stations 20a, 20b, 20c which may require the information for optimizing a wireless transmission such as performed over the first wireless communications link 100a between the first base station 20a and the terminal 10a.

That is, base station 20a may, for instance periodically, poll the database 32 for recent channel state information associated with the first wireless communications link 100a and may retrieve such information to optimize its data transmission to the terminal 10a depending on an actual radio channel state as characterized by the retrieved channel state information.

According to one embodiment of the invention, the base stations 20a, 20b, 20c may be connected to said network node 31 hosting the central database 32 with the channel state information by means of a dedicated backbone network, which is symbolized by the dashed arrow 35 in Figure 1.

The network node 31 may also comprise calculation means 33 which control the reception of channel state information from the various base stations or access points 30a, 30b. The calculation means 33 may also control the operation of the database 32 and process any requests from base stations 20a, 20b, 20c or other network devices which seek to retrieve channel state information from the database 32.

According to a further advantageous embodiment of the present invention, said network node 31 is configured to predict an evolution of a wireless communications link 100a associated with said channel state information, and/or to classify said channel state information regarding a speed of a communications terminal 10a and/or the suitability of different communications channels for multiple input multiple output, MIMO, data transmission schemes, and/or a delay spread, and/or to calculate statistical channel information from the received channel state information.

For this purpose, the calculation means 33 may identify relevant channel state information stored in said database 32, cf. step 400 of the flowchart depicted in Figure 3.

In step 410, after having identified channel state information that is relevant to the current analysis, the retrieved channel state information is evaluated in step 410.

For example, in the course of the analysis 410, the calculation means 33 of network node 31 have determined a plurality of different multiple input multiple output, MIMO, data transmission schemes between the base station 20a and the terminal 10a, which are considered to be suitable for future implementation.

In step 420, finally, the results, i.e. the currently possible MIMO schemes are forwarded to the base station 20a which, as a result, may apply these MIMO schemes in near future for transmitting data over the first wireless communications link 100a to the terminal 10a.

Apart from the first terminal 10a, Figure 1 also depicts a second terminal 10b, which may also be a cell phone or some type of electronic equipment including cell phone functionality such as a personal digital assistant, PDA, or a data transmission interface card for a Netbook Computer.

The second terminal 10b maintains an own first wireless communications link 100b with the second base station 20b. Additionally, according to the present invention, the second terminal 10b also maintains an own second wireless communications link 200b with the access point 30b. Thus, the second terminal 10b, too, is enabled to forward channel state information associated with its primary link 100b, to the central database 32.

The infrastructure 30a, 30b, 31 enabling the inventive collection and storage of channel state information may also be denoted as "feedback network".

According to a preferred embodiment, said second wireless communications link 200a, 200b uses a second radio access technology, RAT, which is different from a first radio access technology that is used for said first wireless communications link 100a, 100b. Although requiring the inventive terminals 10a, 10b to offer compatibility with both RATs, this advantageously ensures that no further resources of the first RAT, which serves to implement the first wireless communications link 100a, 100b, have to be allocated for implementing the inventive second wireless communications link 200a, 200b. Thus, a system based on the first RAT is not used for the inventive channel state information transmission at all, although it benefits from such channel state information transmission via the second RAT.

A particularly preferred embodiment of the invention comprises a combination of an LTE-compatible or an LTE-Advanced-compatible RAT for the first wireless communications link 100a, 100b with an IEEE 802.16 ("WiMAX")-compatible RAT for the second wireless communications link 200a, 200b.

In this case, the cellular network 1000 of Figure 1 is an LTE-compatible/LTE-Advanced-compatible network, whereas the devices 30a, 30b are configured as WiMAX-compatible access points. According to this embodiment, the terminals 10a, 10b are capable of both LTE-compatible communications as well as of WiMAX-compatible communications, which may e.g. be achieved by providing each element 10a, 10b with dedicated transceivers for the respective radio access technology.

From downlink messages (step 300 of Figure 2) of the LTE-and/or LTE-Advanced compatible base station 20a to the terminal 10a, the terminal 10a derives channel state information, cf. step 310. According to this embodiment, with LTE-enabled components 10a, 20a, the terminal 10a determines channel state information that conforms to the LTE standard requirements, e.g. explicit Channel State Information, CSI.

Downlink multi-antenna algorithms, which may be employed to form MIMO data transmission schemes or for beam forming applications, require channel state information at the transmitter side, CSIT, as well as SINR or channel quality indicator, CQI, information. Consequently, terminal 10a may determine respective CSIT, SINR, CQI data from the downlink data transmission of the first link 100a to the terminal 10a and may forward said data, preferably together with a time stamp, to the database 32 for retrieval by the base station 20a to be used e.g. for generation of optimum transmission scheme.

Multi-antenna techniques can also be extended to a multi-cell environment, thus creating so-called coordinated multi-point transmission and reception, COMP, where a terminal 10a can receive a signal from multiple base stations 20a, 20b simultaneously, or transmits to said base stations 20a, 20b simultaneously. In this case, CSIT usually also comprises information on neighbor cells so that channel state information comprises a substantial amount of data. According to the present invention, this data is not required to be transmitted via the first link 100a, which is to be used for user data. The large amounts of channel state information may advantageously be transmitted by using the second wireless communications link 200a, 200b provided by the feedback network 30a, 30b, 31.

It is obvious that also for the application of multi-antenna and/or multi-cell techniques within the base stations 20a, 20b, 20c, the channel state information may be stored to the central database 32 for easy sharing between the base stations 20a, 20b, 20c and other devices.

Instead of providing the database 32 in a dedicated network element 31, it may also be collocated or integrated within an existing base station 20a, 20b, 20c.

The inventive base stations 20a, 20b, 20c may advantageously retrieve channel state information such as CSIT, SINR, and the like from the database 32 and may use the retrieved information for scheduling and - with multi-antenna techniques - antenna weight calculation depending on their specific configuration and requirements.

As already mentioned above, the network element 31 hosting the database 32 may also provide additional services such as evaluation of channel state information.

For instance, the network element 31 may provide for a channel extrapolation functionality which predicts future channel properties based on stored and actually measured channel state information.

Although it is preferred that the first wireless communications links 100a, 100b are established by means of a first RAT, such as a GSM- / UMTS- / LTE- compatible RAT, whereas the second wireless communications links 200a, 200b are established by means of a different, second RAT such as IEEE 802.x - compatible RATS, for example WiMAX or the like, it is also possible to employ the same RAT for establishing both communications links 100a, 200a.

However, in this case, the inventive principle proposes to use different carrier frequencies for the different communications links 100a, 200a to attain the inventive advantages in an efficient manner.

For example, if a radio access technology according to the Universal Mobile Telecommunications System, UMTS, standard is employed for both the first and second wireless communications links 100a, 200a, the first wireless communications link 100a has an uplink frequency channel bandwidth of 5 MHz (in the frequency division duplexing case, i.e. UMTS-FDD) at a first carrier frequency, while the second wireless communications link 200a has an uplink frequency channel bandwidth of 5 MHz at a second carrier frequency which is different from the first carrier frequency. I.e., the inventive second wireless communications link 200a corresponds to a separate UMTS frequency channel which - if not used for the inventive transmission of channel state information - could be used by another user or his mobile terminal, respectively, for uplink transmissions.

Consequently, the uplink bandwidth or uplink capacity, respectively, of the first wireless communications link 100a will be fully available for actual data transmission, e.g. of user data. At the same time, the inventive usage of the second wireless communications link 200a advantageously ensures that a considerable amount of bandwidth is also available for transmitting channel state information which enables to provide the base station 20a - or another device exchanging data with the communications terminal 10a over the first communications link - with detailed feedback on an actual state of a wireless transmission channel associated with the first communications link 100a. By employing the inventive principle, sufficient uplink capacity can be guaranteed even if detailed channel state information has to be transmitted such as with multi-cell, multi-antenna settings (e.g. coherent network MIMO).

Thus, by employing the inventive principle, communications over the first wireless communications link 100a may be optimized in the sense of providing and evaluating channel state information without affecting the uplink capacity of said first wireless communications link 100a with channel state related information.

Instead of forwarding the channel state information via access points 30a, 30b to a remote, central database 32, channel state information determined by a terminal 10a may also be directly transmitted to a gateway device (not shown) which is in communication with the base station 20a. Such gateway device is required to be compatible with the secondary RAT used by the terminal 10a for forwarding the determined channel state information.

However, a central database 32 has the following advantages:
- a specific base station 20b can access not only the feedback information, i.e. the channel state information, of its "own" terminal 10b. If advanced interference mitigation schemes are applied, also measurement information (e.g. interference level) from different neighbor base stations 20a, 20c could be collected and stored to the database 32. Depending on the algorithm used in the base station 20b, it decides which information it needs and can retrieve this information individually from the database 32.
- With the central database concept, no uniform feedback radio access network such as made up of the components 30a, 30b, 31 (Figure 1) is needed. Feedback (=channel state) information can rather be provided from the terminals 10a, 10b, 10c to any type of network which is available in the area of the communications network 1000. In the example above this could also be a mix of WLAN hot spots, WiMAX networks and even feedback on a second carrier of the radio access network implemented by the base stations 20a, 20b, 20c. Since the feedback information may be provided to the base stations 20a, 20b, 20c via backhaul 35, a flexible feedback network structure is possible.
- On top of this flexibility, the central database 32 could provide additional functionality or services with respect to preprocessing of the stored channel state information. Thus, it can not only store and forward the feedback information, but may also indicate the time for which the information has been generated. The database 32 could also provide that the evolution of the channel is predicted, e.g. based on extrapolation using polynomials etc.
- When tracking channel state information over time, also a classification functionality can be provided, related e.g. to speed of the terminal 10a or suitability for specific MIMO modes. This could be either generated by default or on specific request of the base stations 20a, 20b, 20c according to their available feature set and requirements.

- Another example for classification of the channel based on collected channel state information would be a delay spread estimation, indicating e.g. the suitability for frequency selective scheduling or coordinated multi-cell transmission and reception.
- Based on the channel state information transmitted to the central data base 32, per terminal a statistical channel information can be calculated and made available to all base stations 20a, 20b, 20c, e.g. in order to support interference coordination schemes and antenna weight calculation algorithms relying on statistical rather than short term channel state information.
- In large networks the database 32 could also be implemented in a distributed way. E.g. clusters of base stations 20a, 20b, 20c share one portion of the overall database 32. If the databases are connected with each other, each base station 20a, 20b, 20c can have in addition also access to the other databases if needed.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Method of operating a communications terminal (10a), particularly a mobile terminal of a cellular communications system, wherein said communications terminal (10a) exchanges (300) data with a further communications device (20a), particularly a base station of a cellular communications system, over a first wireless communications link (100a), wherein said communications terminal (10a) determines (310) channel state information related to said first wireless communications link (100a), and wherein said communications terminal (10a) forwards said channel state information to said further communications device (20a) and/or another remote device (31) over a second wireless communications link (200a), which is different from said first wireless communications link (100a).

2. Method of claim 1, wherein said second wireless communications link (200a) uses the same radio access technology, RAT, as the first wireless communications link (100a), and a second carrier frequency which is different from a first carrier frequency used by said first wireless communications link (100a).

3. Method of claim 1, wherein said second wireless communications link (200a) uses a second radio access technology, RAT, which is different from a first radio access technology that is used for said first wireless communications link (100a).

4. Method according to one of the preceding claims, wherein said first and second radio access technologies comprise: radio access technologies according to the
➢ Global System for Mobile Communications, GSM, standard and/or
➢ Universal Mobile Telecommunications System, UMTS, standard and/or
➢ Long Term Evolution, LTE, standard and/or
➢ LTE-Advanced, and/or
➢ Institute of Electrical and Electronics Engineers, IEEE, 802.11, 802.15, 802.16, 802.20, 802.22 standards.

5. Method according to one of the preceding claims, wherein said first wireless communications link (100a) uses a radio access technology, RAT, according to the Long Term Evolution, LTE, standard, and wherein said second wireless communications link (200a) uses a radio access technology, RAT, according to the IEEE 802.16 standard.

6. Method according to one of the preceding claims, wherein said communications terminal (10a) simultaneously, or at least quasi-simultaneously, maintains the first and second wireless communications links (100a, 200a).

7. Method according to one of the preceding claims, wherein said communications terminal (10a) employs carrier frequencies
➢ in the range of about 700 MHz to about 2600 MHz for said first wireless communications link, and
➢ in the range of about 2400 Mhz to about 2600 MHz and/or about 3400 MHz to about 3600 MHz and/or about 5700 MHz to about 5900 MHz for said second wireless communications link (200a).

8. Method according to one of the preceding claims, wherein said communications terminal (10a) forwards said channel state information to a remote device (31) that is configured to collect said channel state information in a database (32), wherein said communications terminal (10a) preferably assigns time stamp information to said channel state information.

9. Communications terminal (10a), particularly a mobile terminal of a cellular communications system, wherein said communications terminal (10a) is configured to exchange (300) data with a further communications device (20a), particularly a base station of a cellular communications system, over a first wireless communications link (100a), wherein said communications terminal (10a) is configured to determine (310) channel state information related to said first wireless communications link (100a), and wherein said communications terminal (10a) is configured to forward said channel state information to said further communications device (20a) and/or another remote device (31) over a second wireless communications link (200a), which is different from said first wireless communications link (100a).

10. Communications terminal (10a) according to claim 9, wherein said communications terminal (10a) is configured to perform the method according to the claims 1 to 8.

11. Communications terminal (10a) according to one of the claims 9 to 10, wherein said communications terminal (10a) is configured to use a radio access technology, RAT, according to the Long Term Evolution, LTE, standard and/or LTE-Advanced standard for the first wireless communications link (100a) and to use a radio access technology, RAT, according to the IEEE 802.16 standard for the second wireless communications link (200a).

12. Base station (20a), particularly a base station of a cellular communications system, wherein said base station (20a) is configured to exchange (300) data with a further communications device (10a), particularly a terminal (10a) of a cellular communications system, over a first wireless communications link (100a), wherein said base station (20a) is configured to
➢ receive channel state information related to said first wireless communications link (100a) over a second wireless communications link (200a), which is different from said first wireless communications link (100a), and/or to
➢ retrieve channel state information related to said first wireless communications link (100a) from a remote device (31).

13. Network node (31) for a wireless communications system, particularly a cellular communications system, wherein said network node (31) is configured to receive channel state information related to a first wireless communications link (100a) of a communications terminal (10a) from said communications terminal (10a) via a second wireless communications link (200a) and to store said channel state information, preferably together with a time stamp.

14. Network node (31) according to claim 13, wherein said network node (31) is configured to forward channel state information, preferably together with associated time stamp information, to a further device, particularly a base station (20a, 20b, 20c) of said wireless communications system.

15. Network node (31) according to one of the claims 13 to 14, wherein said network node (31) is configured to
➢ predict an evolution of a wireless communications link (100a) associated with said channel state information, and/or to
➢ classify said channel state information regarding a speed of a communications terminal (10a) and/or the suitability of different communications channels for multiple input multiple output, MIMO, data transmission schemes, and/or a delay spread.

16. Communications network (1000) comprising at least one communications terminal (10a) according to one of the claims 9 to 11, at least one base station (20a) according to claim 12, and at least one database (32) for storing channel state information determined by said at least one communications terminal (10a), wherein said database is preferably
➢ integrated to said at least one base station (20a) or
➢ comprised in a separate network node (31), preferably according to one of the claims 13 to 15, or
➢ configured as a distributed database, wherein different portions of said database are assigned to different network elements, particularly different base stations (20a, 20b, 20c) of said communications network (1000).
